# EUROPEAN PATENT SPECIFICATION

(11) **EP 2 821 297 B1**
(45) Date of publication and mention of the grant of the patent: **02.05.2018**
(21) Application number: 14173689.2
(22) Date of filing: 24.06.2014
(51) Int. Cl.: B60S 1/34, B60S 1/40

(54) **Connecting adapter for a wiper pantograph, especially a car wiper pantograph**
Anschlussadapter für einen Wischerpantografen, insbesondere einen Autoscheibenwischerpantografen
Adaptateur de connexion pour un pantographe d'essuie-glace, notamment un pantographe d'essuie-glace de véhicule

(30) Priority: 02.07.2013 PL 40454713
(43) Date of publication of application: 07.01.2015
(73) Proprietor: VALEO AUTOSYSTEMY Sp. z o.o., 32-050 Skawina (PL)
(72) Inventor: Orzel, Wojciech, 32-050 SKAWINA (PL); Cebula, Piotr Pawel, 32-020 Wieliczka (PL)
(74) Representative: Callu Danseux, Violaine

(56) References cited:
- DE-A1-102011 007 671
- GB-A- 2 088 706
- US-A- 2 533 963
- US-A- 5 987 695

## Description

The subject matter of the invention is a connecting adapter for a wiper pantograph, especially a car wiper pantograph. More particularly, the invention relates to a connecting adapter for a wiper pantograph, comprising a first part for rotatably mounting the wiper blade, so that the wiper blade can rotate around a blade rotation axis, and a second part for rotatably mounting a first arm of the pantograph in a first arm mounting area and for rotatably mounting a second arm of the pantograph in a second arm mounting area, so that the first arm can rotate around a first arm rotation axis while the second arm can rotate around a second arm rotation axis.

In the prior art there is known a kind of wiper arm or pantograph. This is a mechanism which moves the blade along the windscreen. It works in such a way that the two arms moving the blade over the windscreen, known as the main arm and the auxiliary arm, are joined together by means of a linkage and the blade is attached to them near the site of this joint. The main arm is secured by a mount and a foot on a main shaft, able to rotate in a hub, while the auxiliary arm is secured to an auxiliary shaft. An electric motor, connected to the main shaft, places the wiper in motion. The pantograph is necessary in order to wipe a certain region of the windscreen as dictated by the rules of law or additional requirements of the vehicle manufacturer. A mounting of the so-called wiper on only a single arm (i.e., without the use of a pantograph) means that the wiper wipes a portion of the windscreen with a shape very similar to a fragment of a region with a width equal to the length of the wiper blade, which does not always meet the requirements of the vehicle manufacturer or the requirements of law.

The wiper blade is attached rotatably to the pantograph, i.e., it can turn (in a limited range) relative to the axis of rotation passing through the region of attachment of the blade to the pantograph. For this purpose, the blade is provided with a connector, also known as an adapter. All blades are provided with a connector - it is a known feature.

A problem which has been identified in the prior art involving the use of a pantograph is the phenomenon of wiping portions of the windscreen of the vehicle beyond the established region, or "overwipe". This is a result of strain of the wiper mechanism under the influence of inertia and dimension variability of the components occurring in every manufacturing process. Document US 5,987,695 A discloses a connecting adapter according to the preamble of independent claim 1. The problem of the present invention is to propose an adapter connecting the wiper blade to a pantograph whose design ensures minimal strain under the influence of inertia and minimizes the overwipe effect.

The connecting adapter for a wiper pantograph, especially a car wiper, comprises a first part for rotatably mounting the wiper blade, so that the wiper blade can rotate around a rotation axis of the wiper blade, and a second part for rotatably mounting a first arm of the pantograph in a first arm mounting area and for rotatably mounting a second arm of the pantograph in a second arm mounting area, so that the first arm can rotate around a first arm rotation axis while the second arm can rotate around a second arm rotation axis, is characterized according to the invention in that the rotation axis of the wiper blade intersects the first arm rotation axis, which passes through the first arm mounting area in the second part for rotatably mounting the pantograph arms.

Between the first part and the wiper blade is situated an adapter, or connector, having a corresponding rotation axis, which makes possible a rotation of the blade relative to the first part.

In the advantageous sample embodiments of the invention contained in the rest of the specification the first arm is the main arm of the wiper pantograph, while the second arm is the auxiliary arm of the wiper pantograph. In general, however, this need not be the case: there are also embodiments of the invention where the assignment of the arms is different (e.g., the opposite, i.e., the first arm is the auxiliary arm and the second arm is the main arm).

An advantageous embodiment of the invention for the wiper arm rotation axis and the rotation axis of the first arm of the pantograph is accomplished by appropriate configuration and mutual positioning of the first part, adapted to a rotatable mounting of the wiper blade, and the second part, adapted to a rotatable mounting of the pantograph arms. Advantageously, the first part adapted to a rotatable mounting of the wiper blade and the second part adapted to a rotatable mounting of the pantograph arms are configured and positioned relative to each other so that the rotation axis of the wiper blade intersects the first arm rotation axis, passing through the mounting area of the first arm in the second part adapted to a rotatable mounting of the pantograph arms.

Alternatively, an embodiment of the invention for the rotation axis of the wiper blade and the rotation axis of the first pantograph arm can be achieved in a different manner. For example, by an adjusting mechanism. In this case, the blade with connector can be shifted in the adapter and held in the established position upon obtaining a proper mutual configuration of the rotation axis. The shifting can be done manually by means of an additional screw (which is more precise), off-centred, and so on. The holding in the established position can be accomplished by friction, gluing, clamping, spline, knurled surface, and so on.

Advantageously, the rotation axis of the wiper blade and the first arm rotation axis form an angle from 83° to 97°, preferably between 87° and 93°, measured in the plane defined by these two intersecting axes. According to the invention, the first arm of the pantograph is rotatably mounted in the second part with a cylindrical element having a longitudinal symmetry axis, preferably with a shaft, a bolt, a rivet or a screw, such that said longitudinal symmetry axis forms the first arm rotation axis with respect to the second part, while the distance between the rotation axis of the wiper blade and the axis connecting the centres of the mounting areas of the first and second arm is not greater than the radius of the cross section of said cylindrical element used for the rotatable mounting of the first arm and the second arm in the second part.

Advantageously, the distance between the rotation axis of the wiper blade and the axis connecting the centres of the mounting areas of the first and second arm is not greater than 45 mm, preferably not greater than 20 mm, and most preferably not greater than 5 mm.

Advantageously, the second arm of the pantograph is rotatably mounted in the second part with a cylindrical element having a longitudinal symmetry axis, preferably with a shaft, a bolt, a rivet or a screw, such that said longitudinal symmetry axis forms the second arm rotation axis with respect to the second part, while the rotation axis of the wiper blade intersects said cylindrical element having a longitudinal symmetry axis.

Advantageously, the rotation axis of the wiper blade intersects the second arm rotation axis, passing through the second arm mounting area in the second part designed for rotatable mounting of the pantograph arms.

Advantageously, the distance between the first arm rotation axis and the second arm rotation axis is at least 30 mm, preferably at least 40 mm, most preferably at least 45 mm.

Advantageously, the first arm mounting area is located closer to the first part designed for rotatable mounting of the wiper blade than the second arm mounting area.

Advantageously, the adapter according to the invention is a single integrally formed element.

The invention will now be presented more closely in advantageous sample embodiments, making reference to the enclosed drawings, in which:
Fig. 1 shows a wiper blade mounted in a pantograph by means of an adapter according to the invention, in perspective view and top view,
Fig. 2 shows a connecting adapter according to the invention in a first sample embodiment, in perspective view, while
Fig. 3 shows a connecting adapter according to the invention in a second sample embodiment, in perspective view and in projections.

The figures employ the following designations: 1 - part designed for the rotatable mounting of the wiper blade (so-called connector), 2 - rotation axis of the wiper blade relative to part 1, 3 - part designed for rotatable mounting of the pantograph arms, 4 - mounting area of the first arm (the main arm) of the pantograph in part 3, 5 - rotation axis of the first arm (the main arm) of the pantograph relative to part 3, 6 - mounting area of the second arm (the auxiliary arm) of the pantograph in part 3, 7 - rotation axis of the second arm (the auxiliary arm) of the pantograph relative to part 3, 8 - axis connecting the centres of the mounting areas 4, 6 of the first and second arm, 9 - adapter according to the invention (as a whole), 10 - wiper blade, 11 - first arm of the pantograph (the main arm), 12 - second arm of the pantograph (the auxiliary arm). The centre of the mounting area of the first arm in part 3 is understood to be the point at which the rotation axis of the first arm intersects the mounting area of the first arm relative to part 3. Similarly, the centre of the mounting area of the second arm in part 3 is understood to be the point at which the rotation axis of the second arm intersects the mounting area of the second arm relative to part 3.

### Sample embodiments of the invention

In the sample embodiments of the invention presented below, the first arm 11 is the main arm of the wiper pantograph, while the second arm 12 is the auxiliary arm of the wiper pantograph. In general, however, this need not be the case: there are also embodiments of the invention where the assignment of the arms is different (e.g., the opposite, i.e., the first arm is the auxiliary arm and the second arm is the main arm).

### Example 1

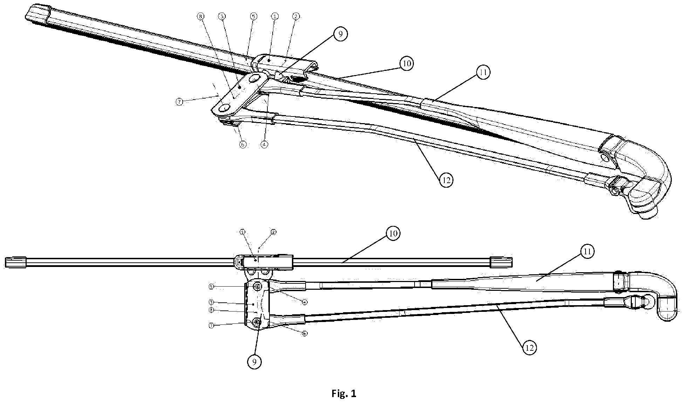

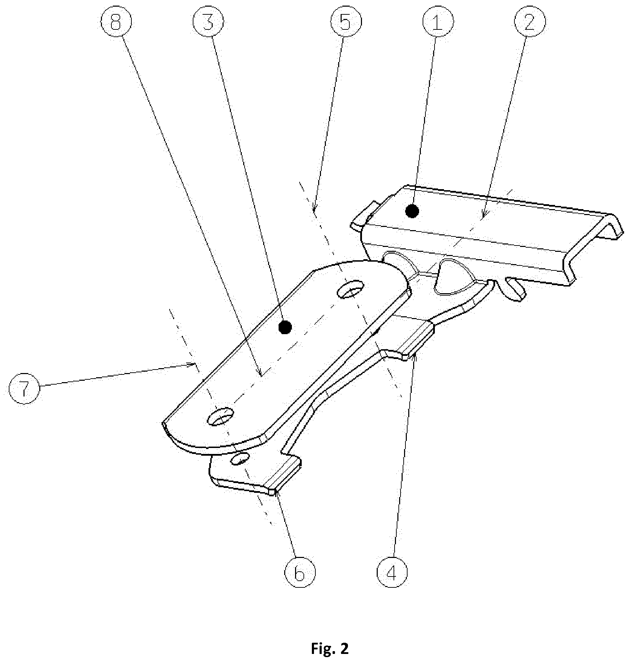

In the first sample embodiment (Fig. 1 and 2), the adapter 9 according to the invention is an element made of metal by a plastic cold working method, with a thickness of 1 to 3 mm, and it comprises the part 1 designed for rotatable mounting of the wiper blade 10 and the part 3 designed for rotatable mounting of the pantograph arms 11, 12.

The wiper blade 10 is mounted in part 1 so that it can rotate relative to the rotation axis 2 of the blade 10 (to a limited degree - that is, by a limited angle). Typically, the mounting is done by a clamping of elements of part 1 on a blade 10 support element. This is a method known in the prior art. Alternatively, one may use other mounting methods known to the skilled person.

In part 3, designed for a rotatable mounting of the pantograph arms 11, 12, there is found the mounting area 4 of the main arm 11 of the pantograph and the mounting area 6 of the auxiliary arm 12 of the pantograph. The main arm 11 is mounted in the mounting area 4 in a way such that it can rotate relative to the rotation axis 5 of the main arm 11, which axis 5 passes through the mounting area 4 of the main arm 11. In turn, the auxiliary arm 12 is mounted in the mounting area 6 in a way such that it can rotate relative to the rotation axis 7 of the auxiliary arm 12, which axis 7 passes through the mounting area 6 of the auxiliary arm 12. In the sample embodiment depicted, the mounting areas 4 and 6 are devised as openings through which pass elements of cylindrical shape (such as a shaft, a pin, a rivet, a screw) for the purpose of a rotatable mounting of the corresponding pantograph arms 11, 12, the ends of which arms 11, 12 are situated in corresponding places inside part 3. The longitudinal axis of said elements of cylindrical shape is the rotation axis 5 of the main arm 11 and the rotation axis 7 of the auxiliary arm 12. Alternatively, one can employ other methods of mounting the arms as are known to the skilled person.

From the standpoint of the invention, the key fact is that the mounting area 4 is situated in such a place of part 3 that the rotation axis 2 of the wiper blade 10 intersects the rotation axis 5 of the main arm 11, passing through the mounting area 4 of the main arm 11 in part 3.

In the sample embodiment depicted, the axes 2 and 5 form an angle from 87 to 93 degrees, measured in the plane described by these two intersecting axes 2, 5 (in other words: in the plane subtended by these two intersecting axes 2, 5). Alternatively, this angle can also be different, according to the specific model of wiper or vehicle, this angle advantageously being from 83 to 97 degrees.

Advantageously, in the event that the auxiliary arm 12 of the pantograph is mounted rotatably in part 3 by means of the aforementioned element of cylindrical shape and having a longitudinal axis of symmetry, such as a shaft, a pin, a rivet, a screw, so that said longitudinal axis of symmetry becomes the rotation axis 7 of the auxiliary arm 12 relative to the part 3, the mounting area 6 of the auxiliary arm 12 is situated in such a place of part 3 that the rotation axis 2 of the wiper blade 10 intersects said element securing the auxiliary arm 12 of the pantograph in part 3.

In the sample embodiment depicted, the mounting area 6 of the auxiliary arm 12 is located in such a place of part 3 that the rotation axis 2 of the wiper blade 10 likewise intersects the rotation axis 7 of the auxiliary arm 12, passing through the mounting area 6 of the auxiliary arm 12 in part 3. This means that the axis 8 connecting the centres of the mounting areas 4, 6 of the main arm 11 and the auxiliary arm 12 runs parallel to the rotation axis 2 in top view. Alternatively, however, the mounting area 6 of the auxiliary arm 12 can be located in such a place of part 3 that the rotation axis 2 of the wiper blade 10 does not intersect the rotation axis 7 of the auxiliary arm 12 in part 3. In this case, the axis 8 connecting the centres of the mounting areas 4, 6 of the main arm 11 and the auxiliary arm 12 does not run parallel to the rotation axis 2 and does not coincide with this axis 2 in top view.

In any case, it is ideal for the distance between the rotation axis 2 of the wiper blade 10 and the axis 8 connecting the centres of the mounting areas 4, 6 of the main arm 11 and the auxiliary arm 12 to not be greater than the radius of the cross section of this cylindrically shaped element used for the fastening of the main arm 11 and the auxiliary arm 12 in part 3. In typical embodiments of the adapter 9 according to the invention for the wipers of passenger cars, this distance is advantageously not greater than 45 mm, preferably not greater than 20 mm, and most preferably not greater than 5 mm.

In the sample embodiment depicted, the distance between the rotation axes 5 and 7 of the main arm 11 and auxiliary arm 12 in part 3 is 45.5 mm. Alternatively, this distance can also be different, according to the particular model of wiper or vehicle, but advantageously from the standpoint of the phenomenon of wiping portions of the vehicle windscreen beyond the established area (overwipe) it is greater than 30 mm, preferably greater than 40 mm, and most preferably greater than 45 mm.

In the sample embodiment depicted, the mounting area 4 of the main arm 11 is situated closer to the part 1 designed for mounting of the wiper blade 10 than the mounting area 6 of the auxiliary arm 12. However, an alternative embodiment is also possible, in which the mounting area 4 of the main arm 11 is located further away from the part 1 designed for mounting of the wiper blade 10 than the mounting area 6 of the auxiliary arm 12.

### Example 2

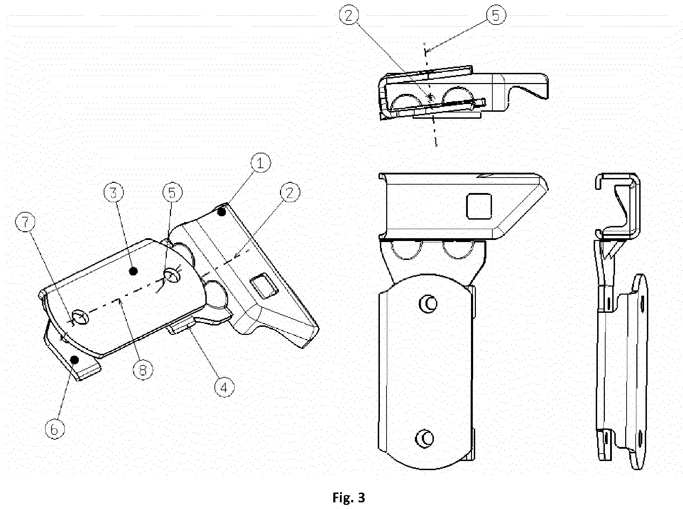

In another sample embodiment (Fig. 3), the adapter 9 according to the invention is basically similar to the adapter described in example 1, but the part 1 designed for the mounting of the wiper blade 10 has a different design than in the case of the adapter shown in Fig. 1 and 2.

As for the material from which the adapters 9 are made, they are typically elements shaped from metal, especially steel sheets, particularly by the plastic cold working method. Alternatively, a plastic can be used, especially materials with good tribological properties, such as PA6, PA66, POM, PA12, and also alloys of materials or materials with admixtures. Alternatively, one can use other materials known to the skilled person, especially metals or their alloys. Yet again, it is possible to use different materials at the same time. In this case, it is best to make the adapter by the overmoulding method.

In one of the proposed embodiments of the invention, it is proposed to manufacture the connecting adapter 9 as a single, integrally shaped element, in particular, one comprising parts 1 and 3.

All of the presented adapters minimize the strain under the influence of inertia and minimize the phenomenon of wiping portions of the vehicle windscreen beyond the established area (overwipe).

## Claims

1. Connecting adapter (9) for a wiper pantograph, especially a car wiper, comprising a first part (1) for rotatably mounting wiper blade (10), so that the wiper blade (10) can rotate around a rotation axis (2) of the wiper blade (10), and a second part (3) for rotatably mounting a first arm (11) of the pantograph in a first arm mounting area (4) and for rotatably mounting a second arm (12) of the pantograph in a second arm mounting area (6), so that the first arm (11) can rotate around a first arm rotation axis (5) while the second arm (12) can rotate around a second arm rotation axis (7), the first arm (11) of the pantograph is rotatably mounted in the second part (3) with a cylindrical element having a longitudinal symmetry axis, preferably with a shaft, a bolt, a rivet or a screw, such that said longitudinal symmetry axis forms the first arm rotation axis (5) with respect to the second part (3), wherein the rotation axis (2) of the wiper blade (10) intersects the first arm rotation axis (5), which passes through the first arm mounting area (4) in the second part (3) for rotatably mounting the pantograph arms (11, 12), **characterised in that** the distance between the rotation axis (2) of the wiper blade (10) and the axis (8) connecting the centres of mounting areas (4, 6) of the first arm (11) and the second arm (12) is not greater than the radius of the cross section of said cylindrical element used for the rotatable mounting of the first arm (11) and the second arm (12) in the second part (3).

2. Connecting adapter according to Claim 1, **characterized in that** the first part adapted to a rotatable mounting of the wiper blade (1) and the second part (10) adapted to a rotatable mounting of the pantograph arms (3) are configured and positioned relative to each other so that the wiper blade rotation axis (2) intersects the first arm rotation axis (5), passing through the mounting area (4) of the first arm in the second part (3) adapted to a rotatable mounting of the pantograph arms (11, 12) .

3. Connecting adapter according to Claim 1 or 2, **characterized in that** the rotation axis (2) of the wiper blade (10) and the first arm rotation axis (5) form an angle from 83° to 97°, preferably between 87° and 93°, measured in the plane defined by these two intersecting axes (2, 5).

4. Connecting adapter according to Claims 1, 2 or 3, **characterized in that** the distance between the rotation axis (2) of the wiper blade (10) and the axis (8) connecting the centres of the mounting areas (4, 6) of the first arm (11) and the second arm (12) is not greater than 45mm, preferably not greater than 20mm, most preferably not greater than 5mm.

5. Connecting adapter according to any of the preceding claims, **characterized in that** the second arm (12) of the pantograph is rotatably mounted in the second part (3) with a cylindrical element having a longitudinal symmetry axis, preferably with a shaft, a bolt, a rivet or a screw, such that said longitudinal symmetry axis forms the second arm rotation axis (7) with respect to the second part (3), while the rotation axis (2) of the wiper blade (10) intersects said cylindrical element having a longitudal symmetry axis.

6. Connecting adapter according to any of the preceding claims, **characterized in that** additionally the rotation axis (2) of the wiper blade (10) intersects the second arm rotation axis (7), passing through the second arm mounting area (6) in the second part (3) designed for rotatable mounting of the pantograph arms (11, 12).

7. Connecting adapter according to any of the preceding claims, **characterized in that** distance between the first arm rotation axis (5) and the second arm rotation axis (7) is at least 30mm, preferably at least 40mm, most preferably at least 45mm.

8. Connecting adapter according to any of the preceding claims, **characterized in that** first arm mounting area (4) is located closer to the first part (1) designed for rotatable mounting of the wiper blade than the second arm mounting area (6).

9. Connecting adapter according to any of the preceding claims, **characterized in that** it is a single integrally formed element.

## Patentansprüche

1. Anschlussadapter (9) für einen Wischerpantografen, insbesondere einen Autoscheibenwischer, umfassend einen ersten Teil (1) zum drehbaren Montieren eines Wischerblatts (10), so dass sich das Wischerblatt (10) um eine Drehachse (2) des Wischerblatts (10) drehen kann, und einen zweiten Teil (3) zum drehbaren Montieren eines ersten Arms (11) des Pantografen in einem ersten Armmontagebereich (4) und zum drehbaren Montieren eines zweiten Arms (12) des Pantografen in einem zweiten Armmontagebereich (6), so dass sich der ersten Arm (11) um eine erste Armdrehachse (5) drehen kann, während sich der zweite Arm (12) um eine zweite Armdrehachse (7) drehen kann, wobei der erste Arm (11) des Pantografen drehbar in dem zweiten Teil (3) mit einem zylindrischen Element, das eine Längssymmetrieachse aufweist, vorzugsweise mit einem Schaft, einem Bolzen, einem Niet oder einer Schraube montiert ist, so dass die Längssymmetrieachse die erste Armdrehachse (5) in Bezug auf den zweiten Teil (3) bildet, wobei die Drehachse (2) des Wischerblatts (10) die erste Armdrehachse (5) schneidet, die durch den ersten Armmontagebereich (4) in dem zweiten Teil (3) zum drehbaren Montieren der Pantografenarme (11, 12) hindurchgeht,
**dadurch gekennzeichnet, dass** die Distanz zwischen der Drehachse (2) des Wischerblatts (10) und der Achse (8) welche die Zentren der Montagebereiche (4, 6) des ersten Arms (11) und des zweiten Arms (12) verbindet, nicht größer ist als der Radius des Querschnitts des zylindrischen Elements, das für die drehbare Montage des ersten Arms (11) und des zweiten Arms (12) im zweiten Teil (3) verwendet wird.

2. Anschlussadapter nach Anspruch 1,
**dadurch gekennzeichnet, dass** der erste Teil, der zum drehbaren Montieren des Wischerblatts (1) geeignet ist, und der zweite Teil (10), der zum drehbaren Montieren der Pantografenarme (3) geeignet ist, derart ausgelegt und relativ zueinander positioniert sind, dass die Wischerblatt-Drehachse (2) die erste Armdrehachse (5) schneidet, die durch den Montagebereich (4) des ersten Arms im zweiten Teil (3) hindurchgeht, der zum drehbaren Montieren der Pantografenarme (11, 12) geeignet ist.

3. Anschlussadapter nach Anspruch 1 oder 2,
**dadurch gekennzeichnet, dass** die Drehachse (2) des Wischerblatts (10) und die erste Armdrehachse (5) einen Winkel von 83° bis 97°, vorzugsweise zwischen 87° und 93°, gemessen in der Ebene, die durch diese zwei einander schneidenden Achsen (2, 5) definiert wird, bilden.

4. Anschlussadapter nach Anspruch 1, 2 oder 3,
**dadurch gekennzeichnet, dass** die Distanz zwischen der Drehachse (2) des Wischerblatts (10) und der Achse (8), welche die Zentren der Montagebereiche (4, 6) des ersten Arms (11) und des zweiten Arms (12) verbindet, nicht größer ist als 45 mm, vorzugsweise nicht größer als 20 mm, am meisten bevorzugt nicht größer als 5 mm.

5. Anschlussadapter nach einem der vorhergehenden Ansprüche,
**dadurch gekennzeichnet, dass** der zweite Arm (12) des Pantografen drehbar im zweiten Teil (3) mit einem zylindrischen Element, das eine Längssymmetrieachse aufweist, vorzugsweise mit einem Schaft, einem Bolzen, einem Niet oder einer Schraube montiert ist, so dass die Längssymmetrieachse die zweite Armdrehachse (7) in Bezug auf den zweiten Teil (3) bildet, während die Drehachse (2) des Wischerblatts (10) das zylindrische Element, das eine Längssymmetrieachse aufweist, schneidet.

6. Anschlussadapter nach einem der vorhergehenden Ansprüche,
**dadurch gekennzeichnet, dass** zusätzlich die Drehachse (2) des Wischerblatts (10) die zweite Armdrehachse (7) schneidet, die durch den zweiten Armmontagebereich (6) im zweiten Teil (3) hindurchgeht, der zum drehbaren Montieren der Pantografenarme (11, 12) ausgebildet ist.

7. Anschlussadapter nach einem der vorhergehenden Ansprüche,
**dadurch gekennzeichnet, dass** die Distanz zwischen der ersten Armdrehachse (5) und der zweiten Armdrehachse (7) mindestens 30 mm, vorzugsweise mindestens 40 mm, am meisten bevorzugt mindestens 45 mm beträgt.

8. Anschlussadapter nach einem der vorhergehenden Ansprüche,
**dadurch gekennzeichnet, dass** der erste Armmontagebereich (4) näher beim ersten Teil (1), der zum drehbaren Montieren des Wischerblatts ausgebildet ist, angeordnet ist als der zweite Armmontagebereich (6).

9. Anschlussadapter nach einem der vorhergehenden Ansprüche,
**dadurch gekennzeichnet, dass** dieser ein einzelnes einteilig gebildetes Element ist.

## Revendications

1. Adaptateur de connexion (9) pour un pantographe d'essuie-glace, notamment un essuie-glace de voiture, comprenant une première partie (1) pour monter en rotation un balai d'essuie-glace (10), de sorte que le balai d'essuie-glace (10) puisse tourner autour d'un axe de rotation (2) du balai d'essuie-glace (10), et une seconde partie (3) pour monter en rotation un premier bras (11) du pantographe dans une zone de montage de premier bras (4) et pour monter en rotation un second bras (12) du pantographe dans une zone de montage de second bras (6), de sorte que le premier bras (11) puisse tourner autour d'un axe de rotation de premier bras (5), tandis que le second bras (12) peut tourner autour d'un axe de rotation de second bras (7), le premier bras (11) du pantographe étant monté en rotation dans la seconde partie (3) avec un élément cylindrique ayant un axe de symétrie longitudinal, de préférence avec un arbre, un boulon, un rivet ou une vis, de sorte que ledit axe de symétrie longitudinal forme l'axe de rotation de premier bras (5) par rapport à la seconde partie (3), l'axe de rotation (2) du balai d'essuie-glace (10) croisant l'axe de rotation de premier bras (5), qui traverse la zone de montage de premier bras (4) dans la seconde partie (3) pour monter en rotation les bras (11, 12) du pantographe, **caractérisé**
**en ce que** la distance entre l'axe de rotation (2) du balai d'essuie-glace (10) et l'axe (8) reliant les centres des zones de montage (4, 6) du premier bras (11) et du second bras (12) n'est pas supérieure au rayon de la section transversale dudit élément cylindrique utilisé pour le montage rotatif du premier bras (11) et du second bras (12) dans la seconde partie (3) .

2. Adaptateur de connexion selon la revendication 1, **caractérisé en ce que** la première partie conçue pour un montage rotatif du balai d'essuie-glace (1) et la seconde partie (10) conçue pour un montage rotatif des bras (3) du pantographe sont conçues et positionnées l'une par rapport à l'autre de sorte que l'axe de rotation (2) de balai d'essuie-glace croise l'axe de rotation de premier bras (5), en traversant la zone de montage (4) du premier bras dans la seconde partie (3) conçue pour un montage rotatif des bras (11, 12) du pantographe.

3. Adaptateur de connexion selon la revendication 1 ou 2, **caractérisé en ce que** l'axe de rotation (2) du balai d'essuie-glace (10) et l'axe de rotation de premier bras (5) forment un angle compris entre 83° et 97°, de préférence entre 87° et 93°, mesuré dans le plan défini par ces deux axes (2, 5) qui se croisent.

4. Adaptateur de connexion selon la revendication 1, 2 ou 3, **caractérisé en ce que** la distance entre l'axe de rotation (2) du balai d'essuie-glace (10) et l'axe (8) reliant les centres des zones de montage (4, 6) du premier bras (11) et du second bras (12) n'est pas supérieure à 45 mm, de préférence pas supérieure à 20 mm, mieux encore pas supérieure à 5 mm.

5. Adaptateur de connexion selon l'une quelconque des revendications précédentes, **caractérisé en ce que** le second bras (12) du pantographe est monté en rotation dans la seconde partie (3) avec un élément cylindrique ayant un axe de symétrie longitudinal, de préférence avec un arbre, un boulon, un rivet ou une vis, de sorte que ledit axe de symétrie longitudinal forme l'axe de rotation de second bras (7) par rapport à la seconde partie (3), tandis que l'axe de rotation (2) du balai d'essuie-glace (10) croise ledit élément cylindrique ayant un axe de symétrie longitudinal.

6. Adaptateur de connexion selon l'une quelconque des revendications précédentes, **caractérisé en ce qu'**en plus l'axe de rotation (2) du balai d'essuie-glace (10) croise l'axe de rotation de second bras (7), en traversant la zone de montage de second bras (6) dans la seconde partie (3) conçue pour un montage rotatif des bras (11, 12) du pantographe.

7. Adaptateur de connexion selon l'une quelconque des revendications précédentes, **caractérisé en ce que** la distance entre l'axe de rotation de premier bras (5) et l'axe de rotation de second bras (7) est d'au moins 30 mm, de préférence d'au moins 40 mm, mieux encore d'au moins 45 mm.

8. Adaptateur de connexion selon l'une quelconque des revendications précédentes, **caractérisé en ce que** la zone de montage de premier bras (4) est située plus près de la première partie (1) conçue pour un montage rotatif du balai d'essuie-glace que la zone de montage de second bras (6).

9. Adaptateur de connexion selon l'une quelconque des revendications précédentes, **caractérisé en ce qu'**il s'agit d'un élément unique formé d'une seule pièce.
